# EUROPEAN PATENT SPECIFICATION

(11) **EP 3 422 838 B1**
(45) Date of publication and mention of the grant of the patent: **06.04.2022**
(21) Application number: 17759006.4
(22) Date of filing: 28.02.2017
(51) Int. Cl.: A01D 75/18, A01D 34/04

(54) **SCRUB CLAW FOR A MOWER**
GESTRÜPPGREIFER FÜR MÄHER
GRILLE À BROUSSAILLE POUR TONDEUSE

(30) Priority: 01.03.2016 AU 2016900762
(43) Date of publication of application: 09.01.2019
(73) Proprietor: Broderick, Mark, John, St Lucia, QLD 4067 (AU); Broderick, Jennifer, Jean, St Lucia, QLD 4067 (AU)
(72) Inventor: BRODERICK, Mark John, St Lucia Queensland 4067 (AU)
(74) Representative: Dummett Copp LLP
(86) International application number: PCT/AU2017/050175
(87) International publication number: WO 2017/147651

(56) References cited:
- WO-A1-2014/182926
- DE-A1-102010 046 574
- DE-B- 1 074 314
- FR-A1- 2 484 761
- FR-A1- 2 659 186
- US-A- 3 218 787
- US-B2- 8 001 753

## Description

### TECHNICAL FIELD

The present invention is directed to a multi-use attachment for a light commercial mower/mulcher which sits forwardly of the mower and which can provide early warning of a concealed obstacle such as a rock or stump which may otherwise damage the mower. The attachment can also improve the mowing /mulching ability of the mower, can function as a rake to rake back material as the mower is reversed and can act as a ground contour follower to reduce the likelihood of the mower blades digging into the ground on uneven ground.

### BACKGROUND

Any references to methods, apparatus or documents of the prior art are not to be taken as constituting any evidence or admission that they formed, or form part of the common general knowledge.

Commercial grade mowers/mulchers (hereinafter referred to as "mowers") comprises a separate apparatus which is attached to the PTO (power take off) of a tractor or similar driven prime mover. A particular type of mower is one which is attached to a PTO in front of the prime mover. This type of mower is often known as a "frontal" mower as opposed to a rear mounted "pulled" mower. The advantage of this orientation is that the prime mover is behind the mower and the driver is facing in the same direction as the mower direction.

A disadvantage with this arrangement is that the mower can be damaged by obstacles such as rocks, stumps, discarded metal items etc. hidden in the long grass which is being mowed.

For this reason, when mowing long grass or undergrowth with a frontal mower, the mower must be slowly moved and the driver must be ever alert to any possible hidden objects which is very time consuming.

Such mowers are also able to slash thicker undergrowth such as brambles, lantana, blackberry and other woods weeds. However these weeds can grow into thick clumps which can hide all sorts of mower damaging items such as rocks, stumps and the like. Mowing the thick clumps is also difficult as the front protective skirt of the mover often pushes the weeds over and the blades ride over the pushed over weeds rather that cutting the weeds off at their bases. It is also often necessary to pull the clumps away to expose any threats to the mower and to be better able to mow over the clumps.

The mower can also be damaged or have accelerated blade wear if the blades scalp into the ground. This can occur if the ground contours are hidden from view caused by bushy undergrowth. A sudden dip or rise can cause the blades to strike the ground. The driver is able to raise and lower the mower slightly to avoid this but if the contours cannot be seen, the driver will be unaware of any sudden dip or lift in the ground. Thus, the mower speed is again reduced to give the driver some time to raise and lower the mower to reduce blade wear. Damage to the mower can cause downtime and increased expenses and there would be an advantage if it were possible to reduce potential damage to the mower during use. There would be an advantage if it were possible to identify potentially damaging obstacles in the path of the mower in such a manner that the mower could be driven at reasonable speeds. There would be a particular advantage if various types of potential damage to the mower and mower blades could be reduced by a single attachment and in a manner which allowed the mower to be driven at reasonable speeds.

DE 10201004657 discloses a front lawn tractor having a comb extending in front of a front axle of the front lawn tractor. The tines of the comb forwardly extend from the front axle with a flat angle near ground level and the comb is pivotably mounted on a bumper of the front lawn tractor.

It is an object of the invention to provide a frontal mower comprising an apparatus attached thereto which would overcome at least one of the abovementioned disadvantages or provide a useful or commercial choice in the marketplace.

### SUMMARY OF THE INVENTION

The present invention provides a frontal mower according to claim 1.

The apparatus, which in one embodiment may be referred to as a "bramble and rock bar" or as a "scrub claw" is ideal for a mower mounted in front of the tractor. Such "frontal" mower/mulcher units are known in the art. Examples can be found at: http://www.bellon.it/en/products/frontal-mowers/ (retrieved 28 February 2017) Such mowers are versatile, but by being mounted in front of the tractor/prime mover means that the mower can be damaged when mowing long grass/undergrowth that may conceal rocks, stumps and other obstacles.

The fins, and especially the shape of the fins, provide great versatility to the apparatus. By having the fins spaced apart, the fins can pass through tall grass and the grass can pass between the fins prior to being mowed by the mower. The fins may even assist in straightening the grass or untangling matted grass prior to being mowed. The lower edge of the fins can slide along the ground (or be slightly above the ground) to provide a degree of ground tracking ability if desired. If there is a hidden rock in the grass, the leading edge of one or more fins (depending on the size of the rock or obstacle) will contact the rock and begin to ride over it thereby lifting the forwardly extending member which will alert the driver of the existence of the rock.

The driver can then raise the forwardly extending member such that the fins clear the rock, drive a little forward and lower the forwardly extending member such that the rear edge of the fins are in front of the rock. The driver can then reverse the mower to drag the rock away from the area to be mowed. If the obstacle cannot be moved, the driver has sufficient reaction time to drive around the obstacle.

All of these functions can be carried out by the apparatus without the driver needing to leave the tractor or prime mover to which the mower is attached.

The apparatus will typically be a separate item which is attached to the mower. Alternatively, it is envisaged that there can be circumstances where the apparatus and the mower will be formed as an integral unit.

The mower will typically comprise a light commercial type unit which can be used to cut long grass and some types of woody weeds such as brambles, lantana, blackberry and the like. The weight of this type of mower will typically be between 200-500 kg and the apparatus is particularly suited to this type of commercial type unit.

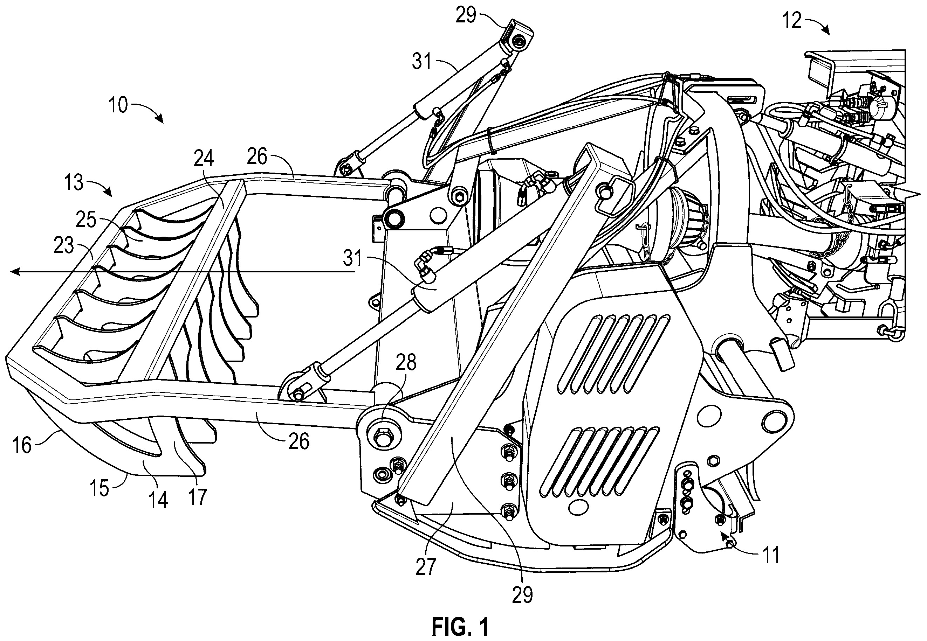

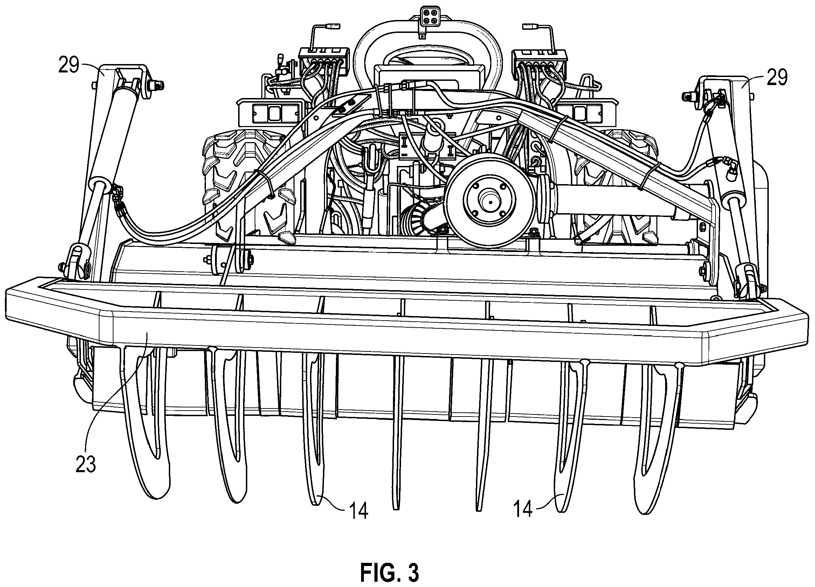

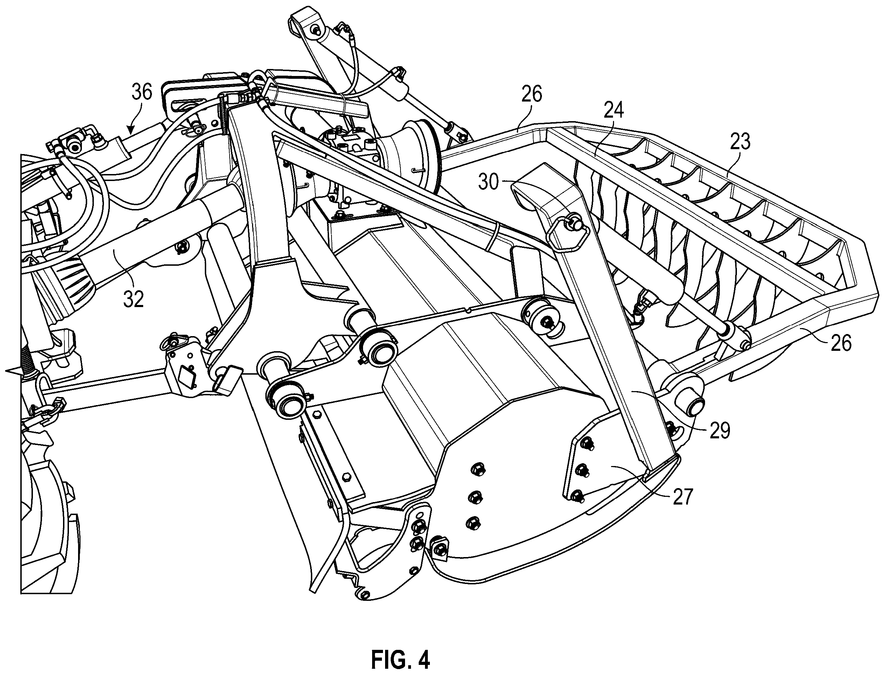

The mower will typically comprise a commercially available unit an example of which is illustrated at least in figure 1 and figure 4. This type of mower comprises a steel housing in which is located a pair of oppositely rotating mower blade units, each unit comprising a rotating disk containing attached blades. The front of the mower housing contains a flexible safety skirt 20 (see for instance figure 3). The rear of the mower contains an elongate ground engaging roller. The mower unit can be attached to the power takeoff (PTO) of a prime mover such as the tractor illustrated in the figures. It should be appreciated that the mower illustrated in the present invention is only a nonlimiting example of a commercially available unit and it is not considered that any unnecessary limitation should be placed on the invention merely by the describing and illustrating of a particular commercially available mower. For instance, flail type mowers can also be used.

The apparatus of the present invention is attachable to such a mower. Various types of attachment means are envisaged and the preferred nonlimiting type of attachment means will be described and illustrated below. The attachment means may be such that the apparatus is semi-permanently attached to the mower. Alternatively, the attachment means may have some form of "quick coupling" arrangement to allow it to be quickly and easily attached and removed from the mower. It is also envisaged that the apparatus may be permanently attached to the mower such as by welding.

The apparatus comprises a forwardly extending member. The forwardly extending member is adapted for movement between a raised position and a lowered position. In the lowered position, the forwardly extending member is substantially in front of the mower.

The forwardly extending member is preferably movable between the raised position and the lowered position in a hinged manner. It is preferred that the hinge point of the forwardly extending member is positioned relatively low to the ground surface to facilitate use of the apparatus and this will be described in greater detail below. Suitably, the forwardly extending member is hinged to the mower. A mounting plate or something similar may be provided to assist in hinge in the forwardly extending member to the mower.

There may however be circumstances where the forwardly extending member can be raised and lowered in a substantially vertical manner.

A lifting and lowering means is preferably provided to lift and lower the forwardly extending member. Suitably, one or more actuators is provided. The actuators may comprise hydraulic or pneumatic rams. It is also envisaged that the lifting and lowering means may comprise a winch or something similar.

The apparatus contains a plurality of spaced apart fins. The spacing between the fins can vary. However, if the fins are spaced too closely apart, more fins will be required and this can add weight and cost to the apparatus. Conversely, if the fins are spaced too far apart, substantially sized obstacles can pass between the fins can be missed by the forwardly extending member. However, it should be realised that if an object does pass between adjacent fins, it will be made visible and the driver of the prime mover is able to stop the mower to prevent damage to the mower. It is envisaged that a spacing of between 20-40 cm between adjacent fins will be suitable.

The number of fins on the forwardly extending member is preferably such that the fins can protect the width of the mower opening. It is envisaged that between 5-12 fins will be sufficient for most commercial mowers.

Each fin is preferably formed from steel and, to reduce weight, each fin may contain a central opening or cutout.

The fins are preferably connected to a support member. The support member is preferably adjacent an upper part of the fins. The support member preferably comprises a first front crossbar and a second rear cross bar spaced from the first crossbar. Suitably, each fin is attached to the first crossbar and the second crossbar. It is envisaged that each fin will be welded or otherwise attached to the support member. However, it is also envisaged that each fin can be bolted or otherwise attached to the support member to enable it to be removed if necessary.

The fin has a lower edge adapted for sliding motion along the ground. Thus, it is envisaged that the lower edge, in use, is substantially parallel to the ground. It is not envisaged that the forwardly extending member will be orientated such that the fins are always directly in contact with the ground. That is, it is envisaged that the lower edges of the fins may also be slightly spaced above the ground surface. This can still provide a degree of ground tracking as any sudden change in the ground contours will cause the lower edge of the fins to contact the ground.

The fins have a leading forwardly extending edge which is configured such that when the fins strike an obstacle such as a rock or stump, it will begin to ride over the obstacle. The leading edge typically has an edge portion which extends outwardly and upwardly to facilitate riding over the obstacle. In a particularly preferred embodiment the leading edge has a forwardly curved edge profile to facilitate in this action.

The fins have a rear edge adapted to engage with and remove obstacles. The rear edge is preferably substantially vertical (when the forwardly extending member is in the lowered position). To facilitate grabbing of obstacles and woody weeds, the rear edge may be slightly concave to provide a slight hook like configuration in the junction area between the rear edge and the lower edge. The rear edge may include teeth or serrations of other grip enhancing means.

Suitably, an accumulator or load sharing means is provided. The accumulator may function to provide a measure of shock absorption to the forwardly extending portion. The accumulator may also function as a load sharing means to reduce weight on the forwardly extending member thereby allowing the forwardly extending member to move upwardly more easily should an obstacle be located. The accumulator may comprise a hydraulic accumulator.

### BRIEF DESCRIPTION OF THE DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:
Figure 1. Illustrates an apparatus attached to a mower and where the forwardly extending member is in the lowered position.
Figure 2. Illustrates a forward view of the apparatus of figure 1 with the forwardly extending member in the raised position.
Figure 3. Illustrates a front view of the apparatus of figure 1 with the forwardly extending member in the lowered position.
Figure 4. Illustrates a rear view and of the apparatus attached to a mower.
Figure 5. Illustrates a close-up view of one side of the apparatus.
Figure 6. Illustrates the apparatus in use mowing long grass.
Figure 7. Illustrates the apparatus contacting a rock on the ground.
Figure 8. Illustrates the ability of the apparatus to drag a rock away.

### DETAILED DESCRIPTION OF PREFERRED EMBODIMENTS

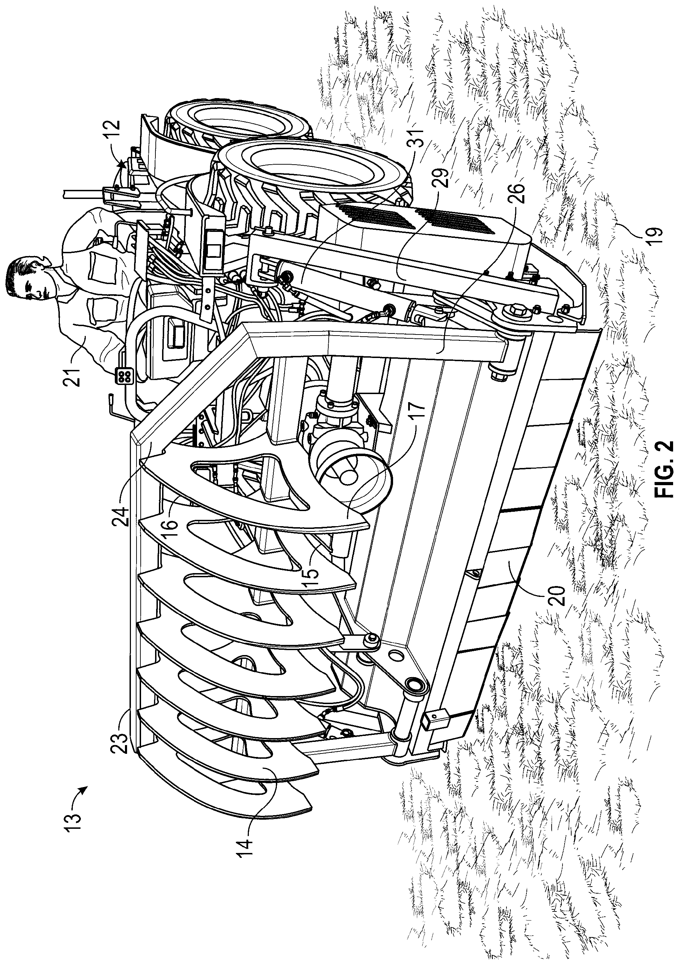

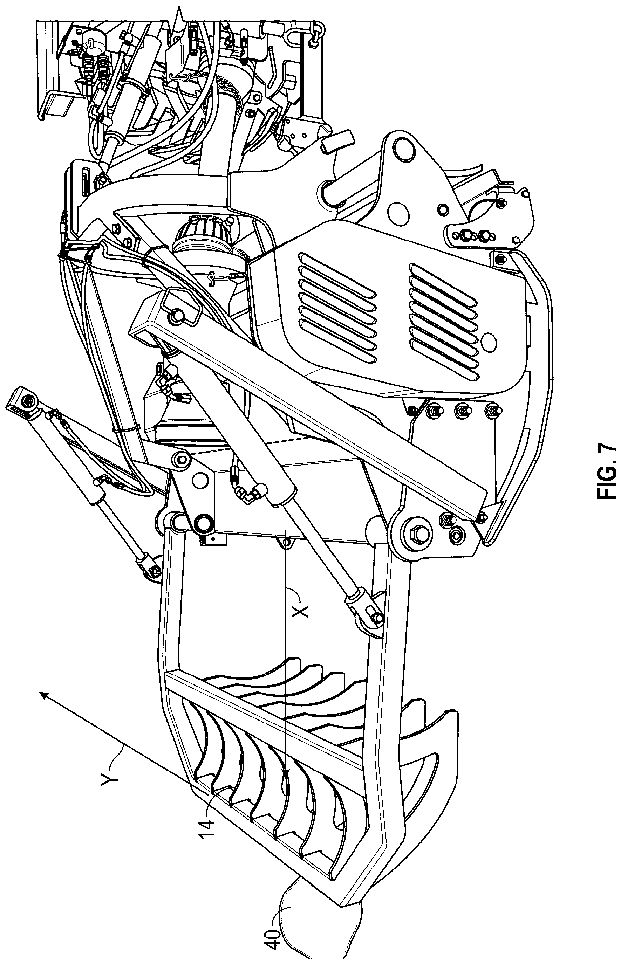

Referring initially to figure 1, there is illustrated an apparatus according to a preferred embodiment of the present invention, being a "bramble and rock bar" 10 that is pivotally attached to a known type of light commercial frontal mower 11. The apparatus 10 has a forwardly extending member 13 which can move between a lowered position illustrated in figure 1 (and figure 3) and a raised position illustrated at least in figure 2. The forwardly extending member has a plurality of spaced apart fins 14. Each fin 14 has a lower edge 15 which is designed to be able to slide along the ground 19 or be slightly spaced above and reasonable parallel the ground 19. Each fin 14 further has a front leading edge 16 which curves upwardly to enable it to slightly ride over a ground obstacle (see figure 7) such as a rock 40, stump or anything else that may be hidden in the long grass and which may damage the mower blades. Finally, each fin 14 has an abrupt rear edge 17 (best illustrated in figure 2) which is slightly concave.

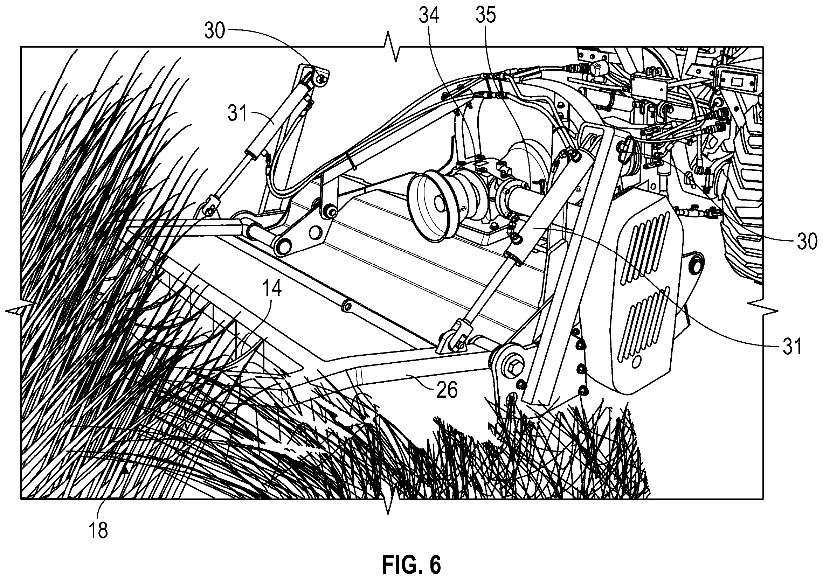

In brief, the apparatus 10 has at least three advantages. One advantage is as an obstacle detector to detect obstacles that may be hidden in the long grass or undergrowth that is being mowed/slashed. When the apparatus is in the lowered position illustrated in figure 1 (see also figure 6), and the mower is moved in a forward direction illustrated by the horizontal arrow in figure 1, the fins 14 will ride over any rock 40 or stump (see figure 6) that may be hidden in the long grass which will lift the forwardly extending member 13 upwardly and which will be a visual indicator to the driver 21 (see figure 2). It is envisaged that some form of audio alarm may also sound if the forwardly extending member 13 suddenly moves upwardly when in encounters a rock in the long grass.

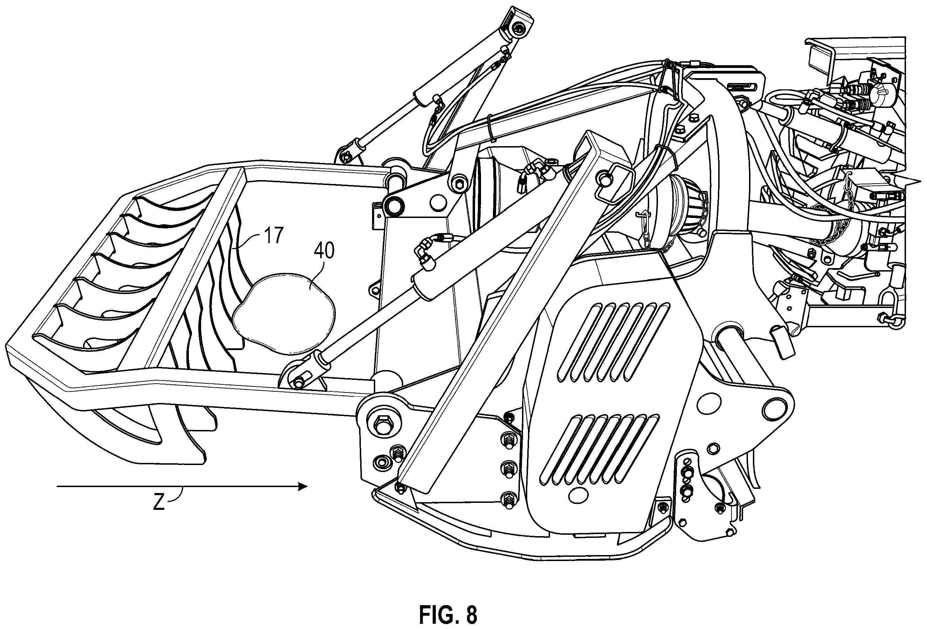

A second advantage (see figures 7 and 8) is as a "claw" or "rake" to enable the apparatus to pull obstacles such as rocks away from the mowing area and also to pull tangled woody weeds out of the ground for better mowing. With the second advantage, the forwardly extending member is raised (see for instance figure 2) and the mower 11 is driven forwardly to abut the obstacle (e.g. rock or stump). The extending member can then be lowered back to the position illustrated in figure 1 which will trap the obstacle between the front of the mower and the rear edge 17 of the fins 14. The mower can then be reversed which will cause the fins 14 to drag the rock 40 or other obstacle away from the area to be mowed. When the obstacle has been dragged away, the forwardly extending member 13 can be raised to the position illustrated in figure 2 to free it from the obstacle, the mower can then be driven back to the mowing area, the forwardly extending member can again be lowered to the position illustrated in figure 1 and mowing can continue.

In a similar manner, if the mower comes against a particularly thick clump of lantana or other similar clump of woody weeds, the forwardly extending member 13 can be raised, the mower can be pushed up against the clump, the forwardly extending member can be lowered such that the fins are pushed into the clump and the mower can be reversed to claw or rake the woody clump away.

A third advantage is as a ground tracking device. The forwardly extending member 13 can be lowered such that the bottom edge of the fins lightly touch the ground 19 or are slightly above the ground 19. The mower can then be driven forwardly and should there be any sudden rise in the ground surface, the lower edge of the fins 14 will contact the sudden rise and the forwardly extending member 13 will be lifted. In this arrangement, it is preferred that the forwardly extending member is located in the lowered orientation and held in a relatively rigid manner such that any lifting of the forwardly extending member 13 will also slightly lift the front of mower 11 to reduce the likelihood of the mower blades scalping into the ground.

All these advantages can be provided by the same apparatus 10.

Referring now in greater detail to apparatus 10, the fins 14 comprise steel plate members that can be welded together to form the particular configuration of the fins. Alternatively, the fins 14 may comprise a solid steel plate which is subsequently cut to form the central cutouts. The steel members need not be made from steel but should be robust enough to survive the function of the apparatus. Thus, the fins may be formed from other metals such as aluminium and there may be circumstances where the fins may even be formed from non-metal materials such as engineering plastics and particularly laminated plastics. The fins may also comprise a core material which may be softer and a hard edge material.

Each fin will typically have a thickness of between 5-20 mm depending on the material from which the fin is manufactured.

Each fin 14 has a lower edge 15, a leading edge 16, and a rear edge 17. In the particular embodiment, each fin is also provided with an upper edge 25 which is slightly concave. Lower edge 15 has a configuration such that it can slide along ground 19 or if positioned slightly above ground 19, will not dig into the ground if there are sudden undulations. Leading edge 16 has an upwardly and slightly convexly curved configuration to facilitate riding over obstacles hidden in the long grass or undergrowth that is to be mowed. The rear edge 17 is substantially vertical when the forwardly extending member is in the lowered position illustrated in figure 1 and is slightly concave (best illustrated in figure 2) to provide a slight a hook like configuration at the junction between the rear edge 17 and the lower edge 15. This can facilitate digging into clumps of woody weeds.

The fins 14, in the preferred embodiment, are all substantially identical in size and shape. This is for convenience only and for ease and cheapness of manufacture and there is no reason why the fins could not be of different configurations as long as the apparatus can still function in the manner required in the present invention. In the preferred embodiment, the fins 14 are all made of the same material (steel) but there may be circumstances where there is an advantage in providing fins of different materials.

The fins 14 are equally spaced apart and in the particular embodiment, the spacing is between 20-40 cm. This seems to provide a reasonable balance between cost of manufacture (by not having too many fins), ease of pushing through long grass (too many fins may impede passage of the apparatus through long grass) while still detecting substantial obstacles that may damage the mower. However, even if an obstacle passes between adjacent fins, it will become visible to the operator 21 and the operator 21 will have sufficient time to stop the mower to prevent damage.

The fins are attached to a support member 22 which comprises a front crossbar 23 and a rear crossbar 24 which are spaced apart and parallel to each other. The crossbars are attached at their ends to lifting arms 26. In the embodiment, the crossbars 23, 24 and the lifting arms 26 are formed from steel box section cut and welded together to form a strong rigid frame unit. The length of the lifting arms is typically between 1-2 meters to provide enough time to stop the mower should an obstacle be detected. Also, this provides enough space to enable the obstacle to be dragged away (see below with reference to figures 7 and 8). The lifting arms can be telescopic or otherwise length adjustable.

The front crossbar 23 can also provide a "push down" function to the grass or scrub to be mowed. As the mower moves forwardly, the crossbar 23 will bend the long grass forwardly to better expose the lower stem the area of the grass which allows the mower to cut the grass in a more efficient manner. A similar effect will be noticed with scrub and woody weeds. The bending over can also better expose any obstacles that may extend between adjacent fins 14 (such as a rusted steel picket).

Lifting arms 26 are pivotly attached to a mounting plate 27 on each side of the mower. A pivot pin 28 functions to pivotly attach the lifting arms 26 to the mounting plate 27. The mounting plates 27 are bolted or otherwise attached to the sides of the mower.

The pivot pin 28 is located fairly close to the ground and this facilitates easier lifting of the forwardly extending member 13 should an obstacle be contacted as the lifting arms 26 are substantially horizontal when the forwardly extending member 13 is in the lowered position.

Rigidly attached to each mounting plate 27 is an inclined support arm 29. Support arm 29 comprises steel box section welded at one end to the mounting plate 27. The other (upper) end of support arm 29 supports a pivot pin 30 which one end of an actuator (in the form of a hydraulic ram 31) is attached. The other end of ram 31 is pivotly attached to a respective lifting arm 26. Operation of ram 31 and therefore lift and lower the forwardly extending member between the position illustrated in figure 1 and the position illustrated in figure 2 and any position there between.

If the width of forwardly extending member is larger, it may be necessary to provide a third intermediate ram (not illustrated) to enable the larger and heavy forwardly extending member to be raised and lowered.

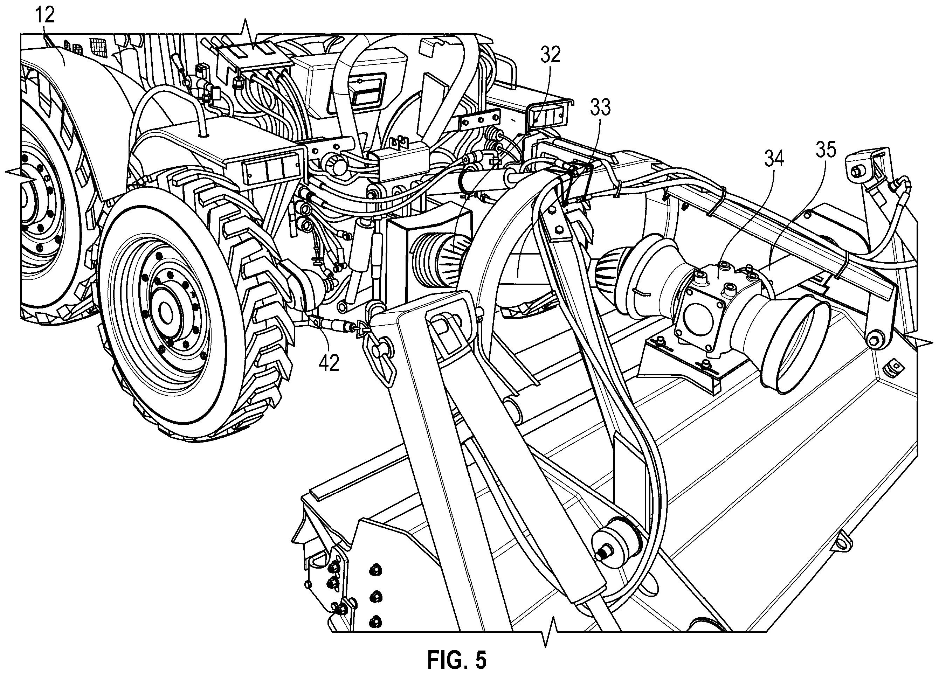

The forwardly extending member 13 can be quite easily raised due to the rams 31 being hydraulically connected to an hydraulic accumulator 42 (see figure 5) which forms part of the hydraulics of the prime mover 12. The pressure in the hydraulic accumulator can be adjusted to take most of the weight of the forwardly extending member 13 so that minimal force from an obstacle (e.g. rock) is required to cause the forwardly extending member 13 to lift and thereby notify the driver of the presence of the obstacle.

Referring now to figures 4-5, the mower 11 is powered by the PTO 32 of the tractor 12. A rotating shaft 33 is connected to a gearbox 34 on the mower which transmits power through an enclosed shaft 35 which transmits power to the rotating blades (not illustrated) inside the mower housing. This arrangement is conventional. With the particular mower illustrated in figures 4 and 5, the front of the mower can be slightly raised and lowered by ram 36 (see particularly figure 4).

Figure 6 illustrates the apparatus in use and in the lowered position in long grass 18.

Figures 7 and 8 illustrates one of the advantages of the apparatus. As the mower moves in a forward direction illustrated by the horizontal arrow "X" in figure 7, the fins 14 of the apparatus come into contact with a rock 40. This will cause the forwardly extending member 13 to move upwardly in the direction of the upwardly extending arrow "Y" in figure 7. This will provide a visual indication to the driver to stop the mower or to at least slow the mower. It is envisaged that the mower will be stopped and the forwardly extending member raised until it clears rock 40. The mower can then be moved slightly forwardly to the position illustrated in figure 8 and the forwardly extending member can be lowered such that rock 40 is now positioned behind the fins 14 and in front of the mower. The mower can then be reversed in the direction of the arrow "Z" in figure 8 which will cause the rock to be dragged away by being in contact with the rear edge 17 of the fins that are contacting the rock. The spacing between the front of the mower and the rear of the fins will depend of the length of the lifting arms, but this spacing is typically between 60-150cm.

### USE FOR THE INVENTION

The above description identifies at least one specific, substantial and credible use for the invention which is to provide a versatile multiuse apparatus that can be attached to a commercial frontal mower and which can function to clear the area of obstacles, alert the driver of obstacles, and which can also be used to drag away woody weedy material such as lantana and the like.

In compliance with the statute, the invention has been described in language more or less specific to structural or methodical features. The term "comprises" and its variations, such as "comprising" and "comprised of" is used throughout in an inclusive sense and not to the exclusion of any additional features. It is to be understood that the invention is not limited to specific features shown or described since the means herein described comprises preferred forms of putting the invention into effect. The invention is, therefore, claimed in any of its forms or modifications within the proper scope of the appended claims appropriately interpreted by those skilled in the art.

Throughout the specification and claims (if present), unless the context requires otherwise, the term "substantially" or "about" will be understood to not be limited to the value for the range qualified by the terms.

Features, integers, characteristics, compounds, chemical moieties or groups described in conjunction with a particular aspect, embodiment or example of the invention are to be understood to be applicable to any other aspect, embodiment or example described herein unless incompatible therewith.

Any embodiment of the invention is meant to be illustrative only and is not meant to be limiting to the invention. Therefore, it should be appreciated that various other changes and modifications can be made to any embodiment described without departing from the scope of the invention as set forth in the appended claims.

## Claims

1. A frontal mower (11) comprising an apparatus (10) attached to a front of the frontal mower (11), the apparatus (10) comprising a forwardly extending member (13) pivotally attached to the front of the mower (11), the forwardly extending member (13) being pivotally movable between a raised position and a lowered position , the member (13) comprising a plurality of spaced apart fins (14) and a support member (22) to support the fins (14), the support member (22) comprising a front crossbar (23) spaced apart and parallel to a rear crossbar (24), and the fins (14) being attached to the front crossbar (23) and the rear crossbar (24) of the support member (22) and each fin (14) having a lower edge (15) adapted for sliding motion along the ground, a convex leading edge (16) extending forwardly and upwardly relative to the lower edge (15), and a rear edge (17) arranged rearwardly and upwardly relative to the lower edge (15) wherein the rear edge (17) is concave to provide a hook like configuration at a junction between the rear edge (17) and the lower edge (16), the rear edge (17) being adapted to engage with and move obstacles.

2. The frontal mower (11) as claimed in claim 1, the apparatus (10) including a pair of spaced apart lift arms (26), the front crossbar (23) extending between the lift arms (26) and adjacent a front end of the lift arms (26).

3. The frontal mower (11) as claimed in any one of the preceding claims, the apparatus (10) including at least one ram (31) to move the forwardly extending member (13).

4. The frontal mower (11) as claimed in claim 3, wherein the ram (31) is coupled at one end to an upwardly extending support arm (29) and at the other end to the forwardly extending member (13).

5. The frontal mower (11) as claimed in claim 4, including a mounting plate (27) attached to the mower (11), the forwardly extending member (13) being pivotally attached to the mounting plate (27), a lower end of the upwardly extending support member (29) being fixed to the mounting plate (27).

6. The frontal mower (11) as claimed in any one of the preceding claims, the apparatus (10) including an accumulator (42) adapted to support the weight of the forwardly extending member (13) to enable the forwardly extending member (13) to be raised with reduced force from an obstacle contacted by the fins (14).

7. The frontal mower (11) as claimed in claim 2, wherein the front of the frontal mower (11) and the rear edge (17) of the fins are spaced between 60 and 150 cm.

## Patentansprüche

1. Frontmäher (11) mit einer Vorrichtung (10), die an einer Vorderseite des Frontmähers (11) angebracht ist, wobei die Vorrichtung (10) ein sich nach vorne erstreckendes Element (13) umfasst, das schwenkbar an der Vorderseite des Mähers (11) angebracht ist, wobei das sich nach vorne erstreckende Element (13) zwischen einer angehobenen Position und einer abgesenkten Position schwenkbar beweglich ist, wobei das Element (13) eine Vielzahl voneinander beabstandeter Rippen (14) und ein Tragelement (22) zum Tragen der Rippen (14) umfasst, wobei das Tragelement (22) einen vorderen Querträger (23) umfasst, der von einem hinteren Querträger (24) beabstandet und parallel dazu ist, und wobei die Rippen (14) an dem vorderen Querträger (23) und dem hinteren Querträger (24) des Tragelements (22) angebracht sind und jede Rippe (14) eine Unterkante (15) aufweist, die für eine Gleitbewegung entlang des Bodens ausgelegt ist, eine konvexe Vorderkante (16), die sich relativ zu der Unterkante (15) nach vorne und nach oben erstreckt, und eine Hinterkante (17), die relativ zu der Unterkante (15) nach hinten und nach oben angeordnet ist, wobei die Hinterkante (17) konkav ist, um an einem Übergang zwischen der Hinterkante (17) und der Unterkante (15) eine hakenartige Ausbildung bereitzustellen, wobei die Hinterkante (17) dazu ausgelegt ist, in Hindernisse einzugreifen und diese zu bewegen.

2. Frontmäher (11) nach Anspruch 1, wobei die Vorrichtung (10) zwei voneinander beabstandete Hebearme (26) aufweist, wobei sich der vordere Querträger (23) zwischen den Hebearmen (26) und angrenzend an ein vorderes Ende der Hebearme (26) erstreckt.

3. Frontmäher (11) nach einem der vorhergehenden Ansprüche, wobei die Vorrichtung (10) mindestens einen Stößel (31) aufweist, um das sich nach vorne erstreckende Element (13) zu bewegen.

4. Frontmäher (11) nach Anspruch 3, wobei der Stößel (31) an einem Ende mit einem sich nach oben erstreckenden Tragarm (29) und an dem anderen Ende mit dem sich nach vorne erstreckenden Element (13) gekoppelt ist.

5. Frontmäher (11) nach Anspruch 4, mit einer Befestigungsplatte (27), die an dem Mäher (11) angebracht ist, wobei das sich nach vorne erstreckende Element (13) schwenkbar an der Befestigungsplatte (27) angebracht ist, wobei ein unteres Ende des sich nach oben erstreckenden Tragelements (29) an der Befestigungsplatte (27) befestigt ist.

6. Frontmäher (11) nach einem der vorhergehenden Ansprüche, wobei die Vorrichtung (10) einen Akkumulator (42) aufweist, der dazu ausgelegt ist, das Gewicht des sich nach vorne erstreckenden Elements (13) zu tragen, damit das sich nach vorne erstreckende Element (13) mit reduzierter Kraft von einem Hindernis angehoben werden kann, mit dem die Rippen (14) in Kontakt gekommen sind.

7. Frontmäher (11) nach Anspruch 2, wobei die Vorderseite des Frontmähers (11) und die Hinterkante (17) der Rippen einen Abstand zwischen 60 und 150 cm haben.

## Revendications

1. - Tondeuse frontale (11) comprenant un appareil (10) fixé à un avant de la tondeuse frontale (11), l'appareil (10) comprenant un élément (13) s'étendant vers l'avant, fixé de manière pivotante à l'avant de la tondeuse (11), l'élément (13) s'étendant vers l'avant étant déplaçable de manière pivotante entre une position relevée et une position abaissée, l'élément (13) comprenant une pluralité d'ailettes espacées (14) et un élément de support (22) pour supporter les ailettes (14), l'élément de support (22) comprenant une barre transversale avant (23) espacée et parallèle à une barre transversale arrière (24), et les ailettes (14) étant fixées à la barre transversale avant (23) et à la barre transversale arrière (24) de l'élément de support (22) et chaque ailette (14) ayant un bord inférieur (15) apte à effectuer un mouvement de glissement le long du sol, un bord d'attaque convexe (16) s'étendant vers l'avant et vers le haut par rapport au bord inférieur (15), et un bord arrière (17) disposé vers l'arrière et vers le haut par rapport au bord inférieur (15), le bord arrière (17) étant concave pour fournir une configuration en forme de crochet à une jonction entre le bord arrière (17) et le bord inférieur (16), le bord arrière (17) étant apte à s'engager avec des obstacles et à déplacer ceux-ci.

2. - Tondeuse frontale (11) selon la revendication 1, l'appareil (10) comprenant une paire de bras de levage espacés (26), la barre transversale avant (23) s'étendant entre les bras de levage (26) et étant adjacente à une extrémité avant des bras de levage (26).

3. - Tondeuse frontale (11) selon l'une quelconque des revendications précédentes, l'appareil (10) comprenant au moins un vérin (31) pour déplacer l'élément (13) s'étendant vers l'avant.

4. - Tondeuse frontale (11) selon la revendication 3, dans laquelle le vérin (31) est couplé, à une extrémité, à un bras de support (29) s'étendant vers le haut et, à l'autre extrémité, à l'élément (13) s'étendant vers l'avant.

5. - Tondeuse frontale (11) selon la revendication 4, comprenant une plaque de montage (27) fixée à la tondeuse (11), l'élément (13) s'étendant vers l'avant étant fixé de manière pivotante à la plaque de montage (27), une extrémité inférieure de l'élément de support (29) s'étendant vers le haut étant fixée à la plaque de montage (27) .

6. - Tondeuse frontale (11) selon l'une quelconque des revendications précédentes, l'appareil (10) comprenant un accumulateur (42) apte à supporter le poids de l'élément (13) s'étendant vers l'avant pour permettre à l'élément (13) s'étendant vers l'avant d'être relevé avec une force réduite à partir d'un obstacle avec lequel les ailettes (14) sont entrées en contact.

7. - Tondeuse frontale (11) selon la revendication 2, dans laquelle l'avant de la tondeuse frontale (11) et le bord arrière (17) des ailettes sont espacés entre 60 et 150 cm.
